(19) Europäisches Patentamt
European Patent Office
Office européen des brevets

(11) **EP 3 452 305 B2**

(12) **NOUVEAU FASCICULE DE BREVET EUROPEEN**
Après la procédure d'opposition

(45) Date de publication et mention de la décision concernant l'opposition:
**22.11.2023 Bulletin 2023/47**

(45) Mention de la délivrance du brevet:
**06.01.2021 Bulletin 2021/01**

(21) Numéro de dépôt: **17731568.6**

(22) Date de dépôt: **21.06.2017**

(51) Classification Internationale des Brevets (IPC):
**B60C 1/00** *(2006.01)*     **B60C 11/00** *(2006.01)*
**B60C 11/16** *(2006.01)*

(52) Classification Coopérative des Brevets (CPC):
**B60C 11/16; B60C 1/0016; B60C 11/005;**
**B60C 11/1625; B60C 11/1656;** B60C 2011/0025

(86) Numéro de dépôt international:
**PCT/EP2017/065174**

(87) Numéro de publication internationale:
**WO 2018/001806 (04.01.2018 Gazette 2018/01)**

(54) **PNEUMATIQUE CLOUTÉ**

SPIKE-REIFEN

STUDDED TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2016 FR 1655999**

(43) Date de publication de la demande:
**13.03.2019 Bulletin 2019/11**

(73) Titulaire: **Compagnie Générale des Etablissements Michelin**
**63000 Clermont-Ferrand (FR)**

(72) Inventeur: **SARAZIN, Frédéric**
**63040 Clermont-Ferrand Cedex 09 (FR)**

(74) Mandataire: **M.F.P. Michelin et al**
**DCJ/PI - F35 - Ladoux**
**23 place des Carmes-Déchaux**
**63040 Clermont-Ferrand Cedex 9 (FR)**

(56) Documents cités:
| | |
|---|---|
| **EP-A1- 0 813 981** | **EP-A1- 1 055 509** |
| **WO-A1-2011/138504** | **WO-A1-2014/006857** |
| **WO-A1-2014/072853** | **WO-A1-2016/045807** |
| **DE-A1- 2 304 036** | **FR-A1- 2 131 913** |
| **FR-A1- 2 982 529** | **GB-A- 1 546 780** |
| **JP-A- 2015 039 898** | **JP-B2- 4 487 668** |
| **RU-C2- 2 583 235** | **SE-C1- 227 484** |
| **US-A- 4 843 120** | **US-A1- 2004 231 775** |
| **US-A1- 2014 290 814** | **US-A1- 2014 338 806** |

EP 3 452 305 B2

## Description

La présente invention concerne un pneumatique.

L'invention est particulièrement adaptée aux véhicules de tourisme et aux véhicules utilitaires.

Les pneumatiques cloutés possèdent des avantages indéniables en termes de comportement dans les conditions de roulage hivernales, comme par exemple le roulage sur revêtement glacé. Le contact avec la glace, et plus particulièrement la pénétration dudit clou dans la glace, permet de compenser la diminution d'adhérence constatée au niveau des éléments de sculpture de la bande de roulement du pneumatique. En effet, les clous grattent la glace et permettent de générer des efforts additionnels sur la glace. Pour plus de détails sur de tels pneus cloutés, on pourra par exemple se référer aux demandes de brevet FR 2 131 913, EP 0 813 981, GB 1 546 780, et DE 23 04 036 qui traitent de pneumatiques cloutés pour véhicules de type poids lourd.

Une des difficultés dans l'utilisation de tels pneumatiques cloutés consiste dans le fait que ces pneumatiques, lorsqu'ils sont utilisés sur une route non glacée ou enneigée, dégradent l'état de surface de la route et conduisent à l'usure prématurée de la chaussée.

C'est pour cette raison qu'un certain nombre de pays ont interdit les pneumatiques cloutés ou en ont limité l'utilisation à certains types de véhicules et/ou à des périodes hivernales limitées.

Or, une augmentation de l'efficacité d'adhérence sur glace d'un pneumatique clouté se traduit habituellement soit par un caractère abrasif supérieur de chaque clou vis-à-vis de la chaussée pour un nombre de clous constant, soit par une augmentation du nombre de clous en maintenant constant le caractère abrasif de chaque clou.

Ceci conduit généralement à augmenter l'effet néfaste du pneumatique clouté sur la chaussée non glacée ou enneigée.

La présente invention vise à prévoir un pneumatique clouté possédant une excellente adhérence sur glace tout en ayant un impact réduit sur une chaussée non glacée ou enneigée.

L'invention concerne un pneumatique comprenant une bande de roulement ayant une surface de roulement, et une pluralité de clous ancrés dans la bande de roulement et s'étendant en saillie par rapport à la surface de roulement.

Selon une caractéristique générale, la densité surfacique moyenne de clous sur la surface de roulement est au moins égale à 6,7 clous par décimètre au carré (dm$^2$). Selon une autre caractéristique générale, la section maximale $S_{max}$ de chaque clou, considérée perpendiculairement à l'axe d'allongement dudit clou, de la pluralité de clous est au plus égale à 35 millimètres au carré (mm$^2$).

Par « pneumatique », on entend tous les types de bandages élastiques soumis ou non à une pression interne.

On entend par « surface de roulement » d'un pneumatique, la surface de la bande de roulement qui entre en contact avec la chaussée lorsque ce pneumatique roule gonflé à sa pression d'utilisation et en le considérant dépourvu de clous.

La « surface de roulement » est calculée à partir de la largeur et du diamètre de la bande de roulement du pneumatique libre, c'est-à-dire non monté sur sa jante.

On entend ici par « densité surfacique moyenne», le rapport entre le nombre total de clous et la surface de roulement du pneumatique exprimée en dm$^2$. Autrement dit, les clous sont repartis dans la bande de roulement avec une densité moyenne de 6,7 clous pour 1 dm$^2$ de surface de roulement.

On entend par « section maximale», la section maximale du clou considérée perpendiculairement à l'axe d'allongement du clou. Dans le cas d'un clou cylindrique, cette section maximale est définie par le diamètre dudit clou.

Des essais effectués par la demanderesse ont permis de mettre en évidence que la densité surfacique particulière de clous combinée à une telle section maximale permet d'accroître la performance d'adhérence sur chaussée glacée du pneumatique clouté tout en limitant son action abrasive sur chaussée sèche.

L'augmentation de la densité surfacique moyenne de clous par rapport aux pneumatiques cloutés conventionnels permet d'obtenir une répartition de la charge sur un plus grand nombre de clous dans la zone de contact de la bande de roulement avec la chaussée. L'adhérence du pneumatique sur chaussée glacée est améliorée. En outre, l'usure des clous est limitée.

Par ailleurs, la section maximale des clous qui a été déterminée par la demanderesse permet d'obtenir un bon compromis entre l'adhérence améliorée sur glace du pneumatique et le caractère abrasif limité des clous sur la chaussée.

Selon une caractéristique optionnelle, la densité linéique moyenne de clous sur la surface de roulement est au moins égale à 115 clous par mètre. On entend ici par « densité linéique moyenne», le rapport entre le nombre total de clous et la circonférence de la surface de roulement du pneumatique exprimée en mètre. Autrement dit, les clous sont repartis dans la bande de roulement avec une densité moyenne de 115 clous pour 1 mètre de circonférence de surface de roulement.

Selon une autre caractéristique optionnelle, la hauteur en saillie Hs de chaque clou de la pluralité de clous est au plus égale à 1,6 millimètres (mm), et préférentiellement comprise entre 0,8 mm et 1,2 mm. Ceci permet de limiter encore le caractère abrasif des clous sur la chaussée. La hauteur en saillie Hs de chaque clou de la pluralité de clous peut être au plus égale à 20% de la hauteur totale Hc dudit clou.

Par « hauteur en saillie » d'un clou, on entend la distance radiale entre le point du clou radialement le plus à l'extérieur et la portion de la surface de roulement qui entoure ce clou, par exemple jusqu'à une distance de 1 centimètre par rapport à l'axe du clou. Une direction « radiale » est une direction correspondant à un rayon du pneumatique. La direction radiale est donc une direction qui est perpendiculaire à l'axe de rotation du pneumatique. Le point du clou radialement le plus à l'extérieur est ainsi le point de ce clou le plus éloigné de l'axe de rotation du pneumatique.

Selon une caractéristique optionnelle avantageuse, la force de frappe statique de chaque clou de la pluralité de clous est comprise dans une plage allant de 120 à 170 Newtons (N). Dans un mode de réalisation préféré, la force de frappe statique de chacun des clous du pneumatique est comprise dans la plage allant de 120 à 170 N. Alternativement, il est toutefois possible de prévoir que seulement une partie des clous présente chacun une force de frappe statique comprise dans cette plage.

Par « force de frappe statique » d'un clou, on entend l'effort vertical exercé par ce clou lorsque le pneumatique est écrasé sur une chaussée plane sous une pression interne de gonflage égale à 2 bars et sous une charge correspondant à 70% de la capacité de charge maximale du pneumatique. Cette capacité de charge maximale est habituellement indiquée par un indice de charge inscrit sur au moins un des flancs du pneumatique.

Avec une telle force de frappe, on favorise encore l'obtention d'un bon compromis entre l'adhérence améliorée sur glace du pneumatique et le caractère abrasif limité des clous sur la chaussée.

La hauteur totale de chaque clou de la pluralité de clous peut être comprise entre 8 mm et 11 mm, et de préférence égale à 10 mm.

Un clou de la pluralité de clous comprend généralement un corps ancré dans la bande de roulement et une mise destinée à entrer en contact avec la chaussée. Le corps et la mise peuvent être réalisés dans des matériaux différents. Préférentiellement, la mise est réalisée en carbure de tungstène et le corps est en alliage métallique, préférentiellement en acier. Alternativement, le corps et la mise peuvent être réalisés dans un même matériau. Les clous de la pluralité de clous peuvent comprendre une tête ancrée dans la bande de roulement et reliée au corps, la section maximale $S_{max}$ correspondant à la section maximale de ladite tête.

La section maximale de la mise dudit clou peut avantageusement être comprise entre 3 mm$^2$ et 3,5 mm$^2$. La section est considérée perpendiculairement à l'axe d'allongement du clou. Ceci permet de limiter encore le caractère abrasif des clous sur la chaussée.

La masse de chaque clou de la pluralité de clous peut être comprise entre 0,7 g et 1,2g.

De préférence, le taux d'entaillement surfacique de la bande de roulement à l'état neuf dudit pneumatique est compris entre 30% et 50%.

Par « taux d'entaillement surfacique » d'une bande de roulement, on entend le rapport entre d'une part la différence entre l'aire totale de la surface de la bande de roulement et l'aire des parties des éléments de sculpture destinées à rentrer en contact avec le sol lors du roulage, et d'autre part cette aire totale de la surface de la bande de roulement.

Alternativement ou en combinaison, le taux d'entaillement volumique de la bande de roulement à l'état neuf dudit pneumatique est compris entre 25% et 50%. Par « taux d'entaillement volumique » d'une bande de roulement, on entend le rapport entre le volume de creux de la bande de roulement, constitué par les rainures et les incisions, sur le volume total de la bande de roulement.

Dans un mode de réalisation, la hauteur des sculptures de la bande de roulement peut être comprise entre 6 mm et 12 mm.

Dans un mode de réalisation, la bande de roulement comprend une première partie délimitant la surface de roulement et au moins une deuxième partie radialement à l'intérieur de la première partie et à l'intérieur de laquelle est ancrée une tête de chaque clou, la première partie étant formée dans une première composition caoutchouteuse et ladite deuxième partie étant formée dans une deuxième composition caoutchouteuse différente de la première composition caoutchouteuse. Ainsi, il est possible de prévoir une première composition caoutchouteuse présentant de bonnes propriétés de résistance à l'usure et à l'adhérence. La deuxième composition caoutchouteuse peut quant à elle être choisie pour favoriser l'obtention d'une bonne tenue mécanique des clous dans la bande de roulement.

Selon une caractéristique optionnelle, le module complexe de cisaillement dynamique G*(-10°C) de la première composition caoutchouteuse est compris entre 1 MPa et 2 MPa. Le module complexe de cisaillement dynamique de ladite deuxième composition caoutchouteuse peut quant à lui évoluer en fonction de la température tel que G*(5°C) est supérieur ou égal à 5 MPa et G*(20°C) est inférieur ou égal à 0.5xG*(5°C).

Le « module complexe » G* est défini par la relation suivante :

$$G^* = \sqrt{(G'^2 + G''^2)}$$

dans laquelle G' représente le module élastique et G" représente le module visqueux.

Les termes modules élastiques visqueux désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre « d » de l'éprouvette est de 10 mm (elle a donc une section circulaire de 78.5 mm$^2$), l'épaisseur « L » de chacune des portions de composition caoutchouteuse est de 2 mm, ce qui donne un ratio «d/L» de 5 (contrairement à la norme ISO 2856, mentionnée dans la norme ASTM, paragraphe X2.4, qui préconise une valeur d/L de 2).

On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. Une accommodation de l'éprouvette est réalisée préalablement à la mesure. L'éprouvette est alors sollicitée en cisaillement sinusoïdal à 10Hz, à 100% de déformation crête-crête, à température ambiante.

La mesure est réalisée au cours d'une rampe de température croissante de 1,5°C par minute, depuis une température $T_{min}$ inférieure à la température de transition vitreuse $T_g$ du matériau, jusqu'à une température $T_{max}$ qui peut correspondre au plateau caoutchoutique du matériau. Avant de commencer le balayage, on stabilise l'échantillon à la température $T_{min}$ pendant 20 minutes pour avoir une température homogène au sein de l'échantillon. Le résultat exploité est le module élastique de cisaillement dynamique G' et le module visqueux de cisaillement G" aux températures choisies (en l'occurrence -10°, 5° et 20°C). La température de transition vitreuse $T_g$ de la première composition caoutchouteuse peut être comprise entre -50°C et -30°C.

Dans ce qui précède, les bornes indiquées pour un domaine de valeurs sont comprises dans ce domaine, notamment dans les expressions « compris entre » et « allant de ... à ... ».

La présente invention sera mieux comprise à la lecture de la description détaillée d'un mode de réalisation pris à titre d'exemple nullement limitatif et illustré par les dessins annexés sur lesquels :

- la figure 1 est une vue schématique en perspective d'un pneumatique clouté selon un exemple de réalisation de l'invention,
- la figure 2 est une vue de face d'un clou du pneumatique de la figure 1, et
- la figure 3 est une vue schématique partielle en coupe du pneumatique de la figure 1.

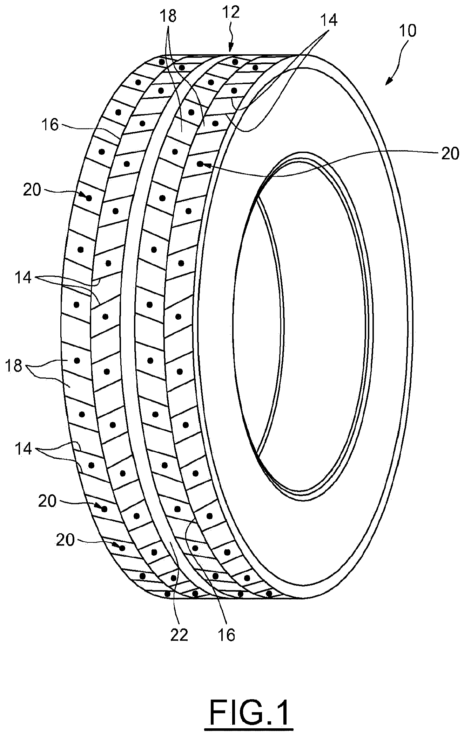

Sur la figure 1 est représenté schématiquement un pneumatique 10 comprenant une bande de roulement 12 ayant une surface de roulement (non référencée) destinée à venir en contact avec une chaussée lors du roulage. La bande de roulement 12 comprend une pluralité de rainures transversales 14 et circonférentielles 16 qui délimitent une pluralité de pains ou blocs 18 de gomme. Chaque bloc 18 comprend une face de contact formant une partie de la surface de roulement de la bande de roulement 12.

Le pneumatique 10 comprend également une pluralité de clous 20 fixés dans la bande de roulement 12 du pneumatique et disposés sur toute la largeur de la surface de roulement dans les blocs 18 de gomme. La disposition des clous 20 sur la bande de roulement 12 telle qu'illustrée à la figure 1 est uniquement illustrative et non limitative. Il est par exemple être possible de prévoir plusieurs clous 20 sur un même bloc 18 de gomme. La bande de roulement 12 du pneumatique comprend ici une nervure 22 centrale dépourvue de clous. Alternativement, il est possible de prévoir une nervure 22 comprenant des clous.

Les clous 20 sont disposés à plusieurs positions autour de la périphérie de la bande de roulement 12 de sorte qu'à tout instant une partie de ces clous 20 soient en contact avec la chaussée sur laquelle roule le pneumatique 10. Comme cela sera décrit plus en détail par la suite, le nombre total de clous 20 en saillie par rapport à la surface de roulement du pneu clouté et la section maximale de chaque clou sont prévus de sorte que ce pneumatique clouté possède une excellente adhérence sur glace tout en ayant un impact réduit sur une chaussée non glacée ou non enneigée.

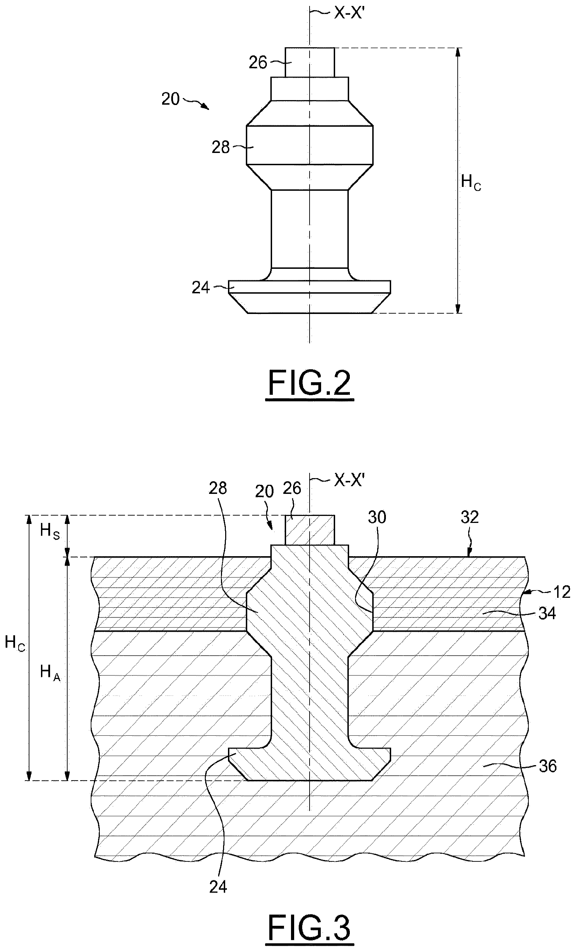

Comme illustré à la figure 2, chaque clou 20, d'axe X-X' longitudinal, comprend une tête 24 pour l'ancrage dans la bande de roulement 12 du pneumatique, une mise 26 destinée à entrer en contact avec la chaussée (glace, neige ou revêtement nu) lorsque le pneumatique roule, et un corps 28 reliant la mise et la tête. Dans l'exemple de réalisation illustré, le clou 20 présente un profil cylindrique. En variante, le clou 20 pourrait présenter tout autre profil, par exemple polygonal. Dans l'exemple de réalisation illustré, la mise 26 est centrée sur l'axe X-X'. Alternativement, la mise 26 peut être décentrée par rapport audit axe.

La mise 26 du clou peut avantageusement être réalisée à l'aide d'un matériau distinct de celui du reste du clou 20. Cela permet d'utiliser pour cette partie un matériau plus dur par rapport au matériau de la tête 24 et du corps 28 dans la mesure où la mise 26 est sujette à de très fortes sollicitations mécaniques. Cela permet par ailleurs de réaliser, pour certaines familles de produits, un corps 28 et une tête 24 en matériau moulé ou injecté, sur lequel on fixe la mise 21. Le corps 28 peut être réalisé en matière métallique, par exemple en acier. Alternativement, le corps peut être réalisé dans un matériau plastique. La mise 26 peut être réalisée en carbure de tungstène. Alternativement, le clou 20 peut être réalisé en un matériau unique.

La section maximale $S_{max}$ du clou 20 est au plus égale à 35 mm2, cette section correspondant à la plus grande section du clou 20 dans tout plan perpendiculaire à l'axe X-X' du clou, quel que soit la forme géométrique de cette section (circulaire, polygonale, etc.). Dans l'exemple de réalisation illustré, cette section maximale $S_{max}$ du clou correspond à la section maximale de la tête 24 du clou.

La section maximale de la mise 26 du clou est comprise entre 3 mm$^2$ et 3,5 mm$^2$, et de préférence égale à 3,14 mm$^2$. Cette section maximale correspond à la plus grande section de la mise 26 dans tout plan perpendiculaire à l'axe X-X', quel que soit la forme géométrique de cette section (circulaire, polygonale, etc.). La hauteur totale $H_C$ du clou 20 est comprise entre 8 mm et 11 mm, et de préférence égale à 10 mm. La hauteur totale $H_C$ est définie par la hauteur cumulée de la tête 24, du corps 28 et de la mise 26. La masse du clou peut être comprise entre 0,7g et 1,2g, et de préférence égale à 1,15g.

La figure 3 représente schématiquement une partie de la bande roulement 12 du pneumatique qui est pourvue d'une alvéole 30 à l'intérieur de laquelle est monté un clou 20. L'alvéole 30 débouche sur la surface de roulement 32 de la bande de roulement 12. De manière connue en soi, à l'état libre de l'alvéole 30, i.e. avant insertion du clou 20, celle-ci peut présenter une forme cylindrique de dimensions inférieures à celles du clou de sorte qu'après insertion le clou 20 est parfaitement enveloppé par la bande de roulement par élasticité et ancré à l'intérieur de celle-ci.

Le clou 20 est disposé dans la bande de roulement 12 de sorte que son axe X-X' est sensiblement parallèle à une direction radiale. Le clou 20 s'étend en saillie vers l'extérieur par rapport à la surface de roulement 32 de la bande de roulement 12 lorsqu'il n'est pas en contact avec la chaussée comme cela est illustré à la figure 3. La hauteur en saillie $H_S$ du clou 20 est au plus égale à 1,6 mm. De préférence, la hauteur en saillie $H_S$ du clou 20 est comprise entre 0,8 mm et 1,2 mm, et avantageusement égale à 0,9 mm. La hauteur en saillie $H_S$ du clou 20 est au plus égale à 20% de la hauteur totale $H_C$ dudit clou. Dans l'exemple de réalisation illustré, l'extrémité supérieure du corps 28 et la mise 26 du clou s'étendent en saillie par rapport à la surface de roulement 32. Selon une variante préférentielle, seule la mise 26 du clou peut s'étendre en saillie hors de la bande de roulement 12. La hauteur ancrée $H_A$ du clou 20 à l'intérieur de la bande de roulement 12 est au plus égale à 9,4 mm.

La demanderesse a déterminé qu'une densité surfacique moyenne de clous 20 sur la surface de roulement du pneumatique 10 au moins égale à 6,7 clous par $dm^2$ combinée à une section maximale des clous 20 au plus égale à 35 $mm^2$ permet d'améliorer de façon significative le compromis adhérence sur glace-nuisance des clous 20 en terme d'usure des chaussées et du bruit intérieur dans le véhicule.

L'augmentation du nombre de clous 20 sur la bande de roulement 12 par rapport aux pneumatiques cloutés conventionnels permet d'augmenter l'efficacité du pneumatique 10 sur chaussée glacée, tandis que la limitation de la section maximale $S_{max}$ de chaque clou permet d'éviter une dégradation excessive de l'état de la surface de la chaussée lorsqu'elle n'est pas recouverte de glace ou de neige. Cette combinaison particulière de la densité surfacique moyenne de clous 20 et de la section maximale des clous permet ainsi d'obtenir un bon compromis entre l'adhérence améliorée sur glace du pneumatique 10 clouté et le caractère abrasif limité des clous 20 sur la chaussée.

De préférence, la force de frappe statique pour chaque clou 20 est comprise dans une plage allant de 120 N à 170 N. Ceci permet de favoriser encore l'obtention d'un bon compromis entre l'adhérence améliorée sur glace et la nuisance limitée des clous 20 en terme d'usure des chaussées et du bruit intérieur dans le véhicule.

De préférence, la densité linéique moyenne de clous 20 sur la surface de roulement du pneumatique 10 est au moins égale à 115 clous par mètre. A titre indicatif, pour un pneumatique de dimension 205/55 R16, la densité surfacique moyenne de clous 20 peut être égale à 6,7 clous par $dm^2$, la force de frappe statique de chaque clou 20 peut être égale à 152 N et la densité linéique moyenne de clous 20 peut être égale à 115 clous par mètre.

Dans l'exemple de réalisation illustré, la bande de roulement 12 comprend une première partie 34 délimitant la surface de roulement 32 et une deuxième partie 36 disposée radialement à l'intérieur de la première partie 201. La première partie 34 de la bande de roulement 12 est formée dans une première composition caoutchouteuse et la deuxième partie 36 est formée dans une deuxième composition caoutchouteuse différente de la première composition caoutchouteuse. Le corps 28 du clou est au moins partiellement en contact avec la première partie 34 tandis que la tête 24 est entièrement ancrée dans la deuxième partie 36 de la bande de roulement 20. La deuxième partie 36 enveloppe entièrement la tête 24 du clou.

La réalisation de la bande de roulement 12 avec au moins des première et deuxième parties 34, 36 est particulièrement avantageuse dans la mesure où cela permet de prévoir une première composition caoutchouteuse adaptée pour obtenir de bonnes propriétés de résistance à l'usure et à l'adhérence sur glace et une deuxième composition caoutchouteuse favorisant l'ancrage mécanique des clous 20.

Alternativement ou en combinaison, il est également possible de choisir la deuxième composition caoutchouteuse de la deuxième partie pour obtenir un pneumatique 10 dont le comportement mécanique change selon la température de la chaussée sur laquelle il roule. Si l'on choisit une deuxième composition caoutchouteuse qui est rigide à basse température et plus molle à haute température, alors le clou 20 aura tendance à rester en saillie de la bande de roulement 12 lorsque la chaussée est froide (recouverte de glace ou de neige) et à s'incliner, en déformant la deuxième composition caoutchouteuse qui l'entoure lorsque chaussée est plus chaude (non recouverte de glace ou de neige). Cet effet est optimisé lorsque le module complexe de cisaillement dynamique G*(-10°C) de la première composition caoutchouteuse est compris entre 1 MPa et 2 MPa et le module complexe de cisaillement dynamique de la deuxième composition caoutchouteuse évolue en fonction de la température tel que G*(5°C) est supérieur ou égal à 5 MPa et G*(20°C) est inférieur ou égal à 0.5xG*(5°C). La température de transition vitreuse $T_g$ de la première composition caoutchouteuse peut être comprise entre -50°C et -30°C.

L'invention a été illustrée sur la base d'un pneumatique équipé de clous présentant une géométrie particulière. On ne sort pas du cadre de la présente invention lorsque les clous du pneumatique présentent une géométrie différente.

## Revendications

1. Pneumatique pour véhicule de tourisme ou véhicule utilitaire comprenant une bande de roulement (12) ayant une surface de roulement (32), et une pluralité de clous (20) ancrés dans la bande de roulement (12) et s'étendant en saillie par rapport à la surface de roulement (32), la densité surfacique moyenne de clous (20) sur la surface de roulement (32) étant au moins égale à 6,7 clous par $dm^2$, **caractérisé en ce que** la section maximale S max de chaque clou (20), considérée perpendiculairement à l'axe d'allongement dudit clou (20), de la pluralité de clous (20) est au plus égale à 35 $mm^2$.

2. Pneumatique selon la revendication 1, dans lequel la densité linéique moyenne de clous (20) sur la surface de roulement (32) est au moins égale à 115 clous par mètre.

3. Pneumatique selon la revendication 1 ou 2, dans lequel la hauteur en saillie Hs de chaque clou (20) de la pluralité de clous (20) est au plus égale à 1,6 mm, et de préférence comprise entre 0,8 mm et 1,2 mm.

4. Pneumatique selon l'une quelconque des revendications précédentes, dans lequel la hauteur en saillie Hs de chaque clou (20) de la pluralité de clous (20) est au plus égale à 20% de la hauteur totale Hc dudit clou (20).

5. Pneumatique selon l'une quelconque des revendications précédentes, dans lequel la hauteur totale Hc de chaque clou (20) de la pluralité de clous (20) est comprise entre 8 mm et 11 mm, et de préférence égale à 10 mm.

6. Pneumatique selon l'une quelconque des revendications précédentes, dans lequel la force de frappe statique de chaque clou (20) de la pluralité de clous (20) est comprise dans une plage allant de 120 N à 170 N, la force de frappe statique de chaque clou (20) étant l'effort vertical exercé par ledit clou (20) lorsque le pneumatique est écrasé sur une chaussée plane sous une pression interne de gonflage égale à 2 bars et sous une charge correspondant à 70% de la capacité de charge maximale du pneumatique.

7. Pneumatique selon l'une quelconque des revendications précédentes, dans lequel chaque clou (20) de la pluralité de clous (20) comprend un corps (28) ancré dans la bande de roulement (12) et une mise (26) destinée à entrer en contact avec la chaussée.

8. Pneumatique selon la revendication 7, dans lequel chaque clou (20) de la pluralité de clous (20) comprend également une tête (24) ancrée dans la bande de roulement (12) et reliée au corps (28), ladite section maximale S max correspondant à la section maximale de ladite tête (24).

9. Pneumatique selon la revendication 7 ou 8, dans lequel la section maximale de la mise (26) dudit clou (20) est comprise entre 3 $mm^2$ et 3,5 $mm^2$.

10. Pneumatique selon l'une quelconque des revendications précédentes, dans lequel le taux d'entaillement surfacique de la bande de roulement (12) à l'état neuf dudit pneumatique est compris entre 30% et 50%.

11. Pneumatique selon l'une quelconque des revendications précédentes, dans lequel le taux d'entaillement volumique de la bande de roulement (12) à l'état neuf dudit pneumatique est compris entre 25% et 50%.

12. Pneumatique selon l'une quelconque des revendications précédentes, dans lequel la bande de roulement (12) comprend une première partie (34) délimitant la surface de roulement (32) et au moins une deuxième partie (36) radialement à l'intérieur de la première partie (34) et à l'intérieur de laquelle est ancrée une tête (24) de chaque clou (20), la première partie (34) étant formée dans une première composition caoutchouteuse et ladite deuxième partie (36) étant formée dans une deuxième composition caoutchouteuse différente de la première composition caoutchouteuse.

13. Pneumatique selon la revendication 12, dans lequel le module complexe de cisaillement dynamique G*(-10°C) de la première composition caoutchouteuse est compris entre 1 MPa et 2 MPa, le module complexe de cisaillement dynamique G*(-10°C) étant défini par la relation suivante : $G^*(-10°C) = (G'^2 + G''^2)^{1/2}$ dans laquelle G' représente le module élastique et G'' représente le module visqueux de la première composition caoutchouteuse mesurés à la température de -10°C sous une sollicitation sinusoïdale en cisaillement simple alterné, à la fréquence de 10 Hz et une contrainte de 0.7 MPa sur des éprouvettes moulées à partir de compositions crues et telles que celles décrites dans la norme ASTM D 5992-96 à la figure X2.1, où le diamètre de l'éprouvette est de 10 mm et l'épaisseur de chacune des portions de composition caoutchouteuse est de 2 mm.

14. Pneumatique selon la revendication 12 ou 13, dans lequel le module complexe de cisaillement dynamique de ladite deuxième composition caoutchouteuse évolue en fonction de la température tel que G*(5°C) est supérieur ou égal à 5 MPa et G*(20°C) est inférieur ou égal à 0.5×G*=(5°C), le module complexe de cisaillement dynamique G*(5°C) étant défini par la relation suivante : $G^*(5°C) = (G'^2 + G''^2)^{1/2}$ dans laquelle G' représente le module élastique et G'' représente le module visqueux de la deuxième composition caoutchouteuse mesurés à la température de 5°C sous une sollicitation sinusoïdale en cisaillement simple alterné, à la fréquence de 10 Hz et une contrainte de 0.7 MPa sur des éprouvettes moulées à partir de compositions crues et telles que celles décrites dans la norme ASTM D 5992-96 à la figure X2.1, où le diamètre de l'éprouvette est de 10 mm et l'épaisseur de chacune des portions de composition caoutchouteuse est de 2 mm, et le module complexe de cisaillement dynamique G*(20°C) étant défini par la relation suivante : $G^*(20°C) = (G'^2 + G''^2)^{1/2}$ dans laquelle G' représente le module élastique et G'' représente le module visqueux de la deuxième composition caoutchouteuse mesurés à la température de 20°C sous une sollicitation sinusoïdale en cisaillement simple alterné, à la fréquence de 10 Hz et une contrainte de 0.7 MPa sur des éprouvettes moulées à partir de compositions crues et telles que celles décrites dans la norme ASTM D 5992-96 à la figure X2.1, où le diamètre de l'éprouvette est de 10 mm et l'épaisseur de chacune des portions de composition caoutchouteuse est de 2 mm.

15. Pneumatique selon l'une quelconque des revendications 12 à 14, dans lequel la température de transition vitreuse (Tg) de la première composition caoutchouteuse est comprise entre -50°C et -30°C.


**Patentansprüche**

1. Luftreifen für Personenkraftwagen oder Nutzfahrzeug, der einen Laufstreifen (12) mit einer Lauffläche (32) und eine Vielzahl von Spikes (20) enthält, die im Laufstreifen (12) verankert sind und sich bezüglich der Lauffläche (32) vorstehend erstrecken, wobei die mittlere Oberflächendichte von Spikes (20) auf der Lauffläche (32) mindestens gleich 6, 7 Spikes pro $dm^2$ ist, **dadurch gekennzeichnet, dass** der maximale Querschnitt $S_{max}$ jedes Spikes (20) der Vielzahl von Spikes (20) lotrecht zur Längsachse des Spikes (20) gesehen höchstens gleich 35 $mm^2$ ist.

2. Luftreifen nach Anspruch 1, wobei die mittlere lineare Dichte von Spikes (20) auf der Lauffläche (32) mindestens gleich 115 Spikes pro Meter ist.

3. Luftreifen nach Anspruch 1 oder 2, wobei die vorstehende Höhe $H_S$ jedes Spikes (20) der Vielzahl von Spikes (20) höchstens gleich 1,6 mm ist und vorzugsweise zwischen 0,8 mm und 1,2 mm liegt.

4. Luftreifen nach einem der vorhergehenden Ansprüche, wobei die vorstehende Höhe $H_S$ jedes Spikes (20) der Vielzahl von Spikes (20) höchstens gleich 20% der Gesamthöhe $H_C$ des Spikes (20) ist.

5. Luftreifen nach einem der vorhergehenden Ansprüche, wobei die Gesamthöhe $H_C$ jedes Spikes (20) der Vielzahl von Spikes (20) zwischen 8 mm und 11 mm liegt und vorzugsweise gleich 10 mm ist.

6. Luftreifen nach einem der vorhergehenden Ansprüche, wobei die statische Aufschlagkraft jedes Spikes (20) der Vielzahl von Spikes (20) in einem Bereich von 120 N bis 170 N liegt, wobei die statische Aufschlagkraft jedes Spikes (20) die vom Spike (20) ausgeübte senkrechte Kraft ist, wenn der Luftreifen auf einer ebenen Straße unter einem inneren Luftdruck gleich 2 Bar und unter einer Last entsprechend 70% der maximalen Tragfähigkeit des Luftreifens zusammengedrückt wird.

7. Luftreifen nach einem der vorhergehenden Ansprüche, wobei jeder Spike (20) der Vielzahl von Spikes (20) einen Körper (28), der im Laufstreifen (12) verankert ist, und eine Spitze (26) aufweist, die dazu bestimmt ist, mit der Straße in Kontakt zu treten.

8. Luftreifen nach Anspruch 7, wobei jeder Spike (20) der Vielzahl von Spikes (20) ebenfalls einen Kopf (24) enthält, der im Laufstreifen (12) verankert und mit dem Körper (28) verbunden ist, wobei der maximale Querschnitt $S_{max}$ dem maximalen Querschnitt des Kopfs (24) entspricht.

9. Luftreifen nach Anspruch 7 oder 8, wobei der maximale Querschnitt der Spitze (26) des Spikes (20) zwischen 3 $mm^2$ und 3,5 $mm^2$ liegt.

10. Luftreifen nach einem der vorhergehenden Ansprüche, wobei der flächenbezogene Negativprofilanteil des Laufstreifens (12) im Neuzustand des Luftreifens zwischen 30% und 50% liegt.

11. Luftreifen nach einem der vorhergehenden Ansprüche, wobei der volumenbezogene Negativprofilanteil des Laufstreifens (12) im Neuzustand des Luftreifens zwischen 25% und 50% liegt.

12. Luftreifen nach einem der vorhergehenden Ansprüche, wobei der Laufstreifen (12) einen ersten Teil (34), der die Lauffläche (32) begrenzt, und mindestens einen zweiten Teil (36) radial innerhalb des ersten Teils (34) enthält und innerhalb dessen ein Kopf (24) jedes Spikes (20) verankert ist, wobei der erste Teil (34) aus einer ersten Kautschukzusammensetzung und der zweite Teil (36) aus einer zweiten Kautschukzusammensetzung anders als die erste Kautschukzusammensetzung geformt ist.

13. Luftreifen nach Anspruch 12, wobei der dynamische komplexe Schubmodul G*(-10°C) der ersten Kautschukzusammensetzung zwischen 1 MPa und 2 MPa liegt, wobei der dynamische komplexe Schubmodul G*(-10°C) durch die folgende Beziehung definiert wird: $G*(-10°C) = \sqrt{(G'^2 + G''^2)}$ , in der G' den Elastizitätsmodul und G" den Viskositätsmodul der ersten Kautschukzusammensetzung gemessen bei der Temperatur von -10°C unter einer alternierenden einfachen sinusförmigen Schubbeanspruchung bei der Frequenz von 10 Hz und einer Belastung von 0,7 MPa an Prüflingen darstellt, die ausgehend von Rohzusammensetzungen geformt werden und so sind wie diejenigen, die in der Norm ASTM D 5992-96 in Figur X2.1 beschrieben sind, wobei der Durchmesser des Prüflings 10 mm und die Dicke jedes der Kautschukzusammensetzungsabschnitte 2 mm beträgt.

14. Luftreifen nach Anspruch 12 oder 13, wobei der dynamische komplexe Schubmodul der zweiten Kautschukzusammensetzung sich abhängig von der Temperatur derart entwickelt, dass G*(5°C) größer als oder gleich 5 MPa und G*(20°C) kleiner als oder gleich 0,5×G*(5°C) ist, wobei der dynamische komplexe Schubmodul G*(5°C) durch die folgende Beziehung definiert wird: $G*(5°C) = \sqrt{(G'^2 + G''^2)}$ , in der G' den Elastizitätsmodul und G" den Viskositätsmodul der zweiten Kautschukzusammensetzung gemessen bei der Temperatur von 5°C unter einer alternierenden einfachen sinusförmigen Schubbeanspruchung bei der Frequenz von 10 Hz und einer Belastung von 0,7 MPa bei Prüflingen darstellt, die ausgehend von Rohzusammensetzungen geformt werden und so sind wie diejenigen, die in der Norm ASTM D 5992-96 in Figur X2.1 beschrieben sind, wobei der Durchmesser des Prüflings 10 mm und die Dicke jedes der Kautschukzusammensetzungsabschnitte 2 mm beträgt, und wobei der dynamische komplexe Schubmodul G*(20°C) durch die folgende Beziehung definiert wird: $G*(20°C) = \sqrt{(G'^2 + G''^2)}$ , in der G' den Elastizitätsmodul und G" den Viskositätsmodul der zweiten Kautschukzusammensetzung gemessen bei der Temperatur von 20°C unter einer alternierenden einfachen sinusförmigen Schubbeanspruchung bei der Frequenz von 10 Hz und einer Belastung von 0,7 MPa bei Prüflingen darstellt, die ausgehend von Rohzusammensetzungen geformt werden und so sind wie diejenigen, die in der Norm ASTM D 5992-96 in Figur X2.1 beschrieben sind, wobei der Durchmesser des Prüflings 10 mm und die Dicke jedes der Kautschukzusammensetzungsabschnitte 2 mm beträgt.

15. Luftreifen nach einem der Ansprüche 12 bis 14, wobei die Glasübergangstemperatur ($T_g$) der ersten Kautschukzusammensetzung zwischen -50°C und -30°C liegt.

**Claims**

1. Tyre for passenger car or utility vehicle comprising a tread (12) having a tread surface (32) and a plurality of studs (20) anchored in the tread (12) and projecting out from the tread surface (32), **characterized in that** the mean surface density of studs (20) on the tread surface (32) is at least equal to 6.7 studs per $dm^2$, **characterized in that** the maximum cross section $S_{max}$ of each stud (20) of the plurality of studs (20) considered perpendicular to the axis of elongation of said stud (20) is at most equal to 35 $mm^2$.

2. Tyre according to Claim 1, in which the mean linear density of studs (20) on the tread surface (32) is at least equal to 115 studs per metre.

3. Tyre according to Claim 1 or 2, in which the projecting height Hs of each stud (20) of the plurality of studs (20) is at most equal to 1.6 mm, and preferably comprised between 0.8 mm and 1.2 mm.

4. Tyre according to any one of the preceding claims, in which the projecting height $H_S$ of each stud (20) of the plurality of studs (20) is at most equal to 20% of the total height Hc of the said stud (20).

5. Tyre according to any one of the preceding claims, in which the total height $H_C$ of each stud (20) of the plurality of studs is comprised between 8 mm and 11 mm, and preferably equal to 10 mm.

6. Tyre according to any one of the preceding claims, in which the static striking force of each stud (20) of the plurality of studs (20) is comprised in a range from 120 N to 170 N, the static striking force of each stud (20) being the vertical load applied by this stud when the tyre is compressed onto a flat roadway under an internal inflation pressure equal to 2 bar and under a load corresponding to 70% of the maximum load capacity of the tyre.

7. Tyre according to any one of the preceding claims, in which each stud (20) of the plurality of studs comprises a jacket (28) anchored in the tread and a stud pin (26) intended to come into contact with the roadway.

8. Tyre according to Claim 7, in which each stud (20) of the plurality of studs (20) also comprises a base (24) anchored in the tread (12) and connected to the jacket (28), the said maximum cross section $S_{max}$ corresponding to the maximum cross section of the said base (24).

9. Tyre according to Claim 7 or 8, in which the maximum cross section of the pin (26) of the said stud (20) is comprised between 3 mm$^2$ and 3.5 mm$^2$.

10. Tyre according to any one of the preceding claims, in which the surface void ratio of the tread of the said tyre when new is comprised between 30% and 50%.

11. Tyre according to any one of the preceding claims, in which the volume void ratio of the tread of the said tyre when new is comprised between 25% and 50%.

12. Tyre according to any one of the preceding claims, in which the tread comprises a first part (34) delimiting the tread surface (32) and at least one second part (36) radially on the inside of the first part and in which a base (24) of each stud is anchored, the first part (34) being formed from a first rubber composition and the said second part being formed from a second rubber composition different from the first rubber composition.

13. Tyre according to Claim 12, in which the complex dynamic shear modulus G*(-10°C) of the first rubber composition is comprised between 1 MPa and 2 MPa, the complex modulus G*(**-10°C**) being defined by the following relationship:

$$G^*(-10°C) = \sqrt{(G'^2 + G''^2)}$$

in which G' represents the elastic modulus and G" represents the viscous modulus measured at a temperature of -10°C under simple alternating sinusoidal shear stress at a frequency of 10 Hz with a stress of 0.7 MPa on test specimens moulded from uncured compositions such as those described in the standard ASTM D 5992-96 in Figure X2.1 where the diameter of the test specimen is 10 mm and the thickness of each of the portions of rubber composition is 2 mm.

14. Tyre according to Claim 12 or 13, in which the complex dynamic shear modulus of the said second rubber composition changes with temperature such that G*(5°C) is greater than or equal to 5 MPa and G*(20°C) is less than or equal to 0.5×G*(5°C) ), the complex modulus G*(**5°C**) being defined by the following relationship:

$$G^*(5°C) = \sqrt{(G'^2 + G''^2)}$$

in which G' represents the elastic modulus and G" represents the viscous modulus measured at a temperature of 5°C under simple alternating sinusoidal shear stress at a frequency of 10 Hz with a stress of 0.7 MPa on test specimens moulded from uncured compositions such as those described in the standard ASTM D 5992-96 in Figure X2.1 where the diameter of the test specimen is 10 mm and the thickness of each of the portions of rubber composition is 2 mm et , the complex modulus G*(**20°C**) being defined by the following relationship:

$$G^*(20°C) = \sqrt{(G'^2 + G''^2)}$$

in which G' represents the elastic modulus and G" represents the viscous modulus measured at a temperature of 20°C under simple alternating sinusoidal shear stress at a frequency of 10 Hz with a stress of 0.7 MPa on test specimens moulded from uncured compositions such as those described in the standard ASTM D 5992-96 in Figure X2.1 where the diameter of the test specimen is 10 mm and the thickness of each of the portions of rubber composition is 2 mm.

15. Tyre according to any one of Claims 12 to 14 in which the glass transition temperature ($T_g$) of the first rubber composition is comprised between -50°C and -30°C.

## FIG.1

## FIG.2

## FIG.3

## RÉFÉRENCES CITÉES DANS LA DESCRIPTION

**Documents brevets cités dans la description**

- FR 2131913
- EP 0813981 A
- GB 1546780 A
- DE 2304036